# EUROPEAN PATENT SPECIFICATION

(11) **EP 4 667 763 B1**
(45) Date of publication and mention of the grant of the patent: **09.12.2026**
(21) Application number: 24183810.1
(22) Date of filing: 21.06.2024
(51) Int. Cl.: F16C 19/52, F04D 19/04, F04D 29/056, F16C 33/58, F16C 41/00, G01K 1/14, F04D 25/06, F04D 29/70

(54) **ROTARY VACUUM PUMP**
VAKUUMPUMPE
POMPE À VIDE ROTATIVE

(43) Date of publication of application: 24.12.2025
(73) Proprietor: Agilent Technologies, Inc., Santa Clara, CA 95051 (US)
(72) Inventor: GIRARDELLO DETONI, Joaquim, SANTA CLARA, 95051 (US); CAU, Simone, SANTA CLARA, 95051 (US); DE PALMA, Giuseppe, SANTA CLARA, 95051 (US); CRISI, Aldo, SANTA CLARA, 95051 (US); COMETTI, Flavio, SANTA CLARA, 95051 (US); MARZOT, Marco, SANTA CLARA, 95051 (US); GARZELLA, Riccardo, SANTA CLARA, 95051 (US); SPAGNOLO, Stefano, SANTA CLARA, 95051 (US)
(74) Representative: Robba, Pierpaolo

(56) References cited:
- EP-B1- 1 890 041
- US-A1- 2021 018 003
- US-B1- 6 179 471
- US-B2- 6 851 848
- US-B2- 9 903 414

## Description

### Technical field

The present invention relates to a rotary vacuum pump including a bearing, more particularly to a bearing equipped with or associated to one or more sensors, such as a temperature sensor.

The present invention can advantageously find application in a rotary vacuum pump, such as a turbomolecular vacuum pump, in which the bearing is under vacuum conditions and the rotating shaft rotates at very high speed, so that high precision in the design and operation of the bearing is required and risks of contamination and/or of losing vacuum tightness must be carefully avoided.

### Prior art

Bearings are mechanical devices that are widely spread in all those application in which a rotating member, e.g. a shaft, rotates relative to stationary member, e.g. a housing.

Rolling bearings are mechanical bearings in which a relative motion between a rotating member, e.g. a shaft, and a stationary member, e.g. a housing, takes places with the interposition of balls or rollers rolling between two tracks, one of which is directly formed on the rotating member or on a first ring (inner ring) integral therewith, and the other one is formed on the stationary member or on a second ring (outer ring) integral therewith. The balls or rollers are generally spaced by a variously shaped cage, capable of separating and holding the balls or rollers. In some applications, the aforesaid relative motion can also take place between a pair of members rotating at different speeds.

Bearings are used in many industrial applications, among which rotary vacuum pumps: rotary vacuum pumps, such as turbomolecular pumps, are equipped with a pump rotor which is mounted to or integral with a rotating shaft that rotates at extremely high speed, typically in the range 20,000 to 90,000 rpm, with respect to a stationary housing carrying a pump stator.

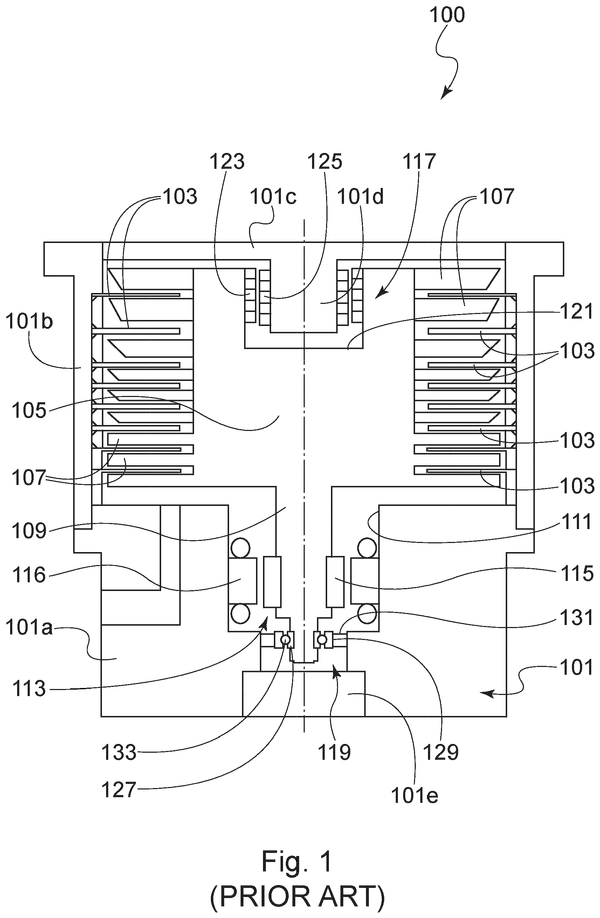

Figure 1 schematically shows an example of turbomolecular pump 100 according to prior art provided with a hybrid suspension arrangement.

The turbomolecular pump 100 comprises a stationary pump housing 101 including a pump body 101a and a pump envelope 101b provided with radially inwardly projecting stator discs 103. The turbomolecular pump further comprises a rotor 105 provided with radially outwardly projecting rotor discs 107 and mounted on a rotating shaft 109, which is received in a cavity 111 of the pump body 101a.

The cavity 111 of the pump body 101a also receives an electric motor 113 driving the rotating shaft 109. Such electric motor includes a motor rotor 115 mounted to the rotating shaft 109 and a motor stator mounted to the wall of the pump body cavity 111.

The rotating rotor discs 107 and the stationary stator discs 103 are alternately arranged in the axial direction and co-operate with one another for pumping a gas from a pump inlet to a pump outlet.

A suspension arrangement is provided between the rotating parts of the pump (i.e. the rotating shaft 109 carrying the rotor 105) and the stationary parts of the pump (i.e. the pump housing 101).

In the shown example, a hybrid suspension arrangement is provided which includes a passive magnetic bearing (PMB) 117 at an upper end portion of the rotor 105 and a mechanical bearing 119 at a lower end portion of the rotating shaft 109.

In order to arrange the passive magnetic bearing 117, the upper end portion of the rotor 105 is provided with a cylindrical cavity 121 and the pump housing 101 correspondingly comprises an upper cover 101c having a cylindrical protrusion 101d which projects downwardly into the rotor cavity 121.

The passive magnetic bearing 117 is made of a plurality of first annular magnets 123 axially stacked on the inner wall of the rotor cavity 121 and a plurality of second annular magnets 125 axially stacked on the wall of the upper cover protrusion 101d and facing the first annular magnets 123. During operation the rotor 105 is kept in position by the repulsive force between the first and second annular magnets 123, 125.

The mechanical bearing 119 is a rolling bearing, such as for instance a deep groove ball bearing (DGBB), and includes an inner ring 127 fitted on the lower end portion of the rotating shaft 109 and fixed thereto by a locking nut (not shown), an outer ring 129 connected to the pump body 101a through a support 131 provided with one or more elastic elements, and rolling elements, such as balls 133, received between the inner and outer rings 127, 129.

The pump body 101a includes a lower cover 101e, keeping the mechanical bearing 119 under vacuum conditions during pump operation.

US 6 851 848 B2 discloses a rotary vacuum pump according to the preambles of claims 1, 5, and 11.

It is evident that other suspension arrangements for turbomolecular pumps may also be envisaged by the person skilled in the art. For instance, mechanical bearings could be provided both at the upper end portion of the rotor and at the lower end portion of the rotating shaft.

In general, in any pump configuration including bearings, such bearings are the components that more easily and frequently can lead to a failure.

More particularly, rolling bearings can easily and frequently lead to a failure.

As a result, on the one hand it is highly desirable to carefully monitor the conditions of the bearing during pump operation, so as to early detect any malfunctioning of the bearing that could lead to pump failure or damage.

On the other hand, it is also highly desirable to provide a construction allowing to easily remove and replace the bearing as soon as a malfunctioning is detected.

As far as the bearing condition monitoring is concerned, such monitoring can be achieved through a temperature sensor attached to the bearing, namely to a stationary component of the bearing (such as the outer ring in the case of a rolling bearing). Such temperature sensor is capable of detecting anomalous temperature fluctuations or temperature spikes, which are an indication of a malfunctioning of the bearing.

According to prior art, a temperature sensor, such as a thermistor, can be screwed into a threaded hole provided in a stationary component of the bearing (such as the outer ring in the case of a rolling bearing).

However, such arrangement can deteriorate the performance of the rolling bearing during pump operation.

For instance, in the case of rolling bearings the threaded hole receiving the temperature sensor can deteriorate the quality of the raceway receiving the rolling elements and hence the performance of the rolling bearing during pump operation.

This deterioration of the bearing performance is particularly undesirable in applications to turbomolecular pumps, since these pumps are used for obtaining very high degrees of vacuum in high precision equipments; accordingly, extremely fine tolerances are needed in order to ensure proper operation of the turbomolecular pump.

Still according to prior art, a temperature sensor, such as a thermistor, can be glued to a stationary component of the bearing (such as the outer ring in the case of a rolling bearing). However, such solution could involve contamination problems, which are evidently undesirable in applications to turbomolecular pumps and, more generally, to vacuum pumps.

In addition, both the above-mentioned known solution can hardly be introduced in series production.

Therefore, an object of the present invention is to provide a bearing, particularly for applications to vacuum pumps and more particularly for applications to turbomolecular pumps, which can be equipped with one or more sensors for monitoring the bearing conditions without engendering any significant deterioration in the performance and reliability of the bearing itself.

Another object of the present invention is to provide a vacuum pump, more particularly a turbomolecular pump, provided with one or more bearings which can be equipped with one or more sensors for monitoring the bearing conditions without engendering any significant deterioration in the performance and reliability of the pump.

As far as the bearing replacement is concerned, it has to be borne in mind that any sensor mounted to the bearing has to be connected to an electrical connector for power and control signal transmission.

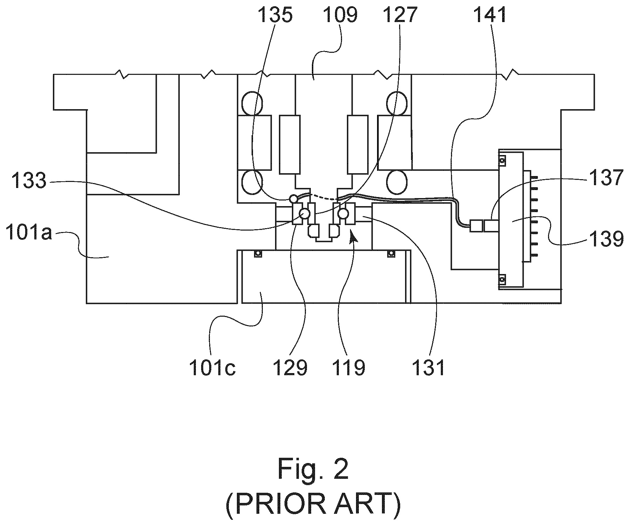

As shown in Figure 2, according to prior art, the electrical connector 135 provided on the outer ring 129 of the rolling bearing 119 is connected to a vacuum feedthrough connector 137 on a vacuum feedthrough plate 139 provided in the pump body 101a.

This connection is obtained by means of a wired connection, such as an electrical cable 141, which is connected at a first end to the electrical connector 135, and is plugged at a second, opposite end to the vacuum feedthrough connector 137.

Advantageously, all the components of the rolling bearing assembly, including the rolling bearing support and the sensors carried by the rolling bearing, can be pre-assembled outside the vacuum pump as a stand-alone cartridge unit and this cartridge unit can be introduced into the pump body and fixed thereto.

Although such cartridge-like construction allows to simplify removal and replacement of the rolling bearing, still the connection between the electrical connector 135 and the vacuum feedthrough connector 137 represents a critical point.

In fact, in order to remove the rolling bearing it is necessary to remove the vacuum feedthrough plate and unplug the electrical cable 141; once a new rolling bearing is inserted into the pump body, the electrical cable 141 of this new rolling bearing has to be led up to the vacuum feedthrough plate 139 and plugged to the vacuum feedthrough connector 137, then the vacuum feedthrough plate 139 has to be closed again.

These operations may compromise the sealing of the vacuum feedthrough plate 139 which ensures vacuum tightness inside the pump housing.

Therefore, a further object of the present invention is to provide a bearing, particularly for applications to vacuum pumps and more particularly for applications to turbomolecular pumps, which can be easily and safely removed and replaced when necessary.

Another object of the present invention is to provide a vacuum pump, more particularly a turbomolecular pump, provided with one or more bearings which can be easily and safely removed and replaced when necessary.

These and other objects are achieved by the bearing and by the rotary vacuum pump as claimed in the appended claims.

### Summary of the invention

According to a first aspect of the present invention a rotary vacuum pump includes a bearing which comprises a printed circuit board having a substantially annular shape, which is fitted onto the bearing and on which one or more sensors are assembled.

Thanks to this arrangement, the one or more sensors can be pre-assembled to the printed circuit board in a separate step, and then the printed circuit board can be mounted to the bearing.

This makes the assembling process of the sensors easier and suitable for series production, and widens the choice of sensors that can be associated with the bearing.

Preferably, at least one temperature sensor, such as a thermistor, is assembled on the printed circuit board, but said printed circuit board may also carry other kind of sensors, for instance accelerometers.

The printed circuit board is preferably fitted on a stationary component of the bearing.

For instance, in case of rolling bearings, the printed circuit board is preferably fitted on the outer ring of the rolling bearing.

According to the invention, the printed circuit board is press-fitted to the bearing in an axial direction.

According to embodiments of the invention, the printed circuit board has a radial cut (i.e. it is made as a Seeger ring). Thanks to this radial cut, large differences between the diameter of the printed circuit board and the diameter of the bearing can be accommodated, and the printed circuit board can be press-fitted to the bearing in the radial direction.

According to embodiments of the invention, contact pads or spacers can be provided between the bearing and the printed circuit board for guaranteeing a precise axial positioning of the printed circuit board.

According to embodiments of the invention, the sensor(s) is/are not directly connected to a respective electrical connector for power and control signal transmission; instead, the printed circuit board is provided with an electrical connector and with an electrical cable plugged thereto. Thanks to this construction, assembling of the bearing is even easier, and the bearing can be easily removed and replaced when necessary.

According to embodiments of the invention, the printed circuit board has a multilayer structure, which dramatically increases its thermal conductivity and allows a more precise measurement of temperature and temperature fluctuations.

According to a further aspect of the present invention a rotary vacuum pump, more particularly a turbomolecular pump, is provided which includes a stationary pump housing carrying a pump stator and a rotating shaft carrying a pump rotor and is provided with a suspension arrangement between said pump housing and said rotating shaft, said suspension arrangement including at least one bearing. Said bearing comprises a printed circuit board having a substantially annular shape, which is fitted onto the bearing and on which one or more sensors are assembled.

According to a further aspect of the present invention, a rotary vacuum pump is provided, which comprises at least one sensor, said sensor being connected to an electrical connector for power and control signal transmission. The electrical connector is connected to the first end of a first connecting cable, which carries a connector at a second opposite end. A second electrical cable is further provided, which carries at a first end a connector suitable for cooperating with the connector of the first electrical cable, and at a second, opposite end a further connector for electrical connection with an external structure.

Thanks to this arrangement, removal and replacement of the bearing are made easier, as the bearing can be removed together with the first electrical cable only, while the second electrical cable is not removed from the external structure.

According to embodiments of the invention, the first connecting cable carries a plug or a socket at its second end, and the second electrical cable carries a socket or, respectively, a plug at its first end.

According to a further aspect of the invention, a rotary vacuum pump, more particularly a turbomolecular pump, is provided which includes a stationary pump housing carrying a pump stator and a rotating shaft carrying a pump rotor and is provided with a suspension arrangement between said pump housing and said rotating shaft, said suspension arrangement including at least one bearing. Said bearing comprises at least one sensor, said sensor being connected to an electrical connector for power and control signal transmission, and the electrical connector is connected to the first end of a first connecting cable, which carries a connector at a second opposite end; a second electrical cable is further provided, which carries at a first end a connector suitable for cooperating with the connector of the first electrical cable, and at a second, opposite end a further connector for electrical connection with a vacuum feedthrough connector of a vacuum feedthrough plate of the pump housing.

According to embodiments of the invention, the first connecting cable carries, at its second end, a connector which is fixed to the rolling bearing assembly, and the second electrical cable carries, at its first end, a connector which is fixed to the pump housing structure. According to a sixth aspect of the invention, a rotary vacuum pump, more particularly a turbomolecular pump, is provided which includes a stationary pump housing carrying a pump stator and a rotating shaft carrying a pump rotor and is provided with a suspension arrangement between said pump housing and said rotating shaft, said suspension arrangement including at least one bearing.

At least one sensor is mounted to the pump housing and is arranged to contact the bearing when the bearing is mounted to the pump shaft.

Thanks to this arrangement, the sensor is integral with the pump housing and no electrical connection between the bearing and the pump housing is needed.

According to embodiments of the invention, the sensor is positioned so that the bearing abuts against said sensor when it is mounted to the pump shaft.

According to embodiments of the invention, the sensor is provided with an elastic finger that contacts the bearing when the bearing is mounted to the pump shaft.

### Brief description of the drawings

Further features and advantages of the invention will be evident from the detailed description of some preferred embodiments, given by way of non-limiting example with reference to the accompanying drawings, wherein:
Fig. 1 schematically shows in a cross-sectional view an example of a known turbomolecular pump;
Fig. 2 is an enlarged view of the bottom portion of the turbomolecular pump of Figure 1;
Fig. 3 is a perspective view of a bearing according to an embodiment of the invention;
Fig. 4 is a cross-sectional view of the bearing of Fig. 3;
Fig. 5 is a top view of the bearing of Fig. 3;
Fig. 6 schematically shows in a cross-sectional view the bottom portion of a turbomolecular pump provided with a bearing according to another embodiment of the invention;
Fig. 7 schematically shows in a cross-sectional view the bottom portion of a turbomolecular pump provided with a bearing according to a variant embodiment of the invention;
Fig. 8 schematically shows in a cross-sectional view the bottom portion of a turbomolecular pump provided with a bearing according to another variant embodiment of the invention;
Fig. 9 schematically shows in a cross-sectional view the bottom portion of a turbomolecular pump provided with a bearing according to a further embodiment of the invention;
Fig. 10 schematically shows in a cross-sectional view the bottom portion of a turbomolecular pump provided with an advantageous arrangement for assembling the motor rotor to the pump rotating shaft;
Fig. 11 schematically shows in a cross-sectional view the bottom portion of a turbomolecular pump provided with a further advantageous arrangement for assembling the motor rotor to the pump rotating shaft.

### Detailed description of preferred embodiments

In the following description of embodiments of the invention, reference will be made to a mechanical bearing, and more specifically to a rolling bearing.

However, such application is in no way to be understood as limiting the scope of the invention applications to other types of bearings can also be envisaged.

In the following description of embodiments of the invention, reference will be made to an application to a rotary vacuum pump, namely to a turbomolecular pump.

However, such application is in no way to be understood as limiting the scope of the invention and other applications can also be envisaged.

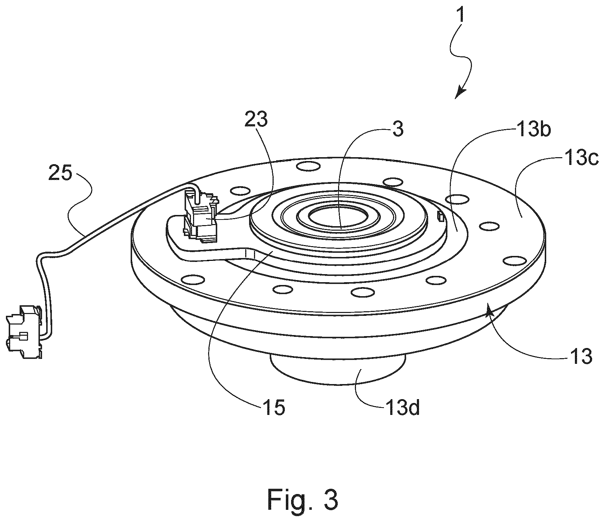

With reference to Figures 3 - 5, a rolling bearing according to an embodiment of the invention is schematically shown.

The rolling bearing 1 includes a first ring or inner ring 3 and a second ring or outer ring 5, concentric with said inner ring and external thereto, said inner and outer rings 3, 5 defining therebetween a raceway 7 that receives a plurality of rolling elements 9.

The rolling bearing 1 could be, for instance, a deep groove ball bearing (DGBB).

The inner ring 3 is intended to be fitted onto a rotating shaft, such as the rotating shaft of a turbomolecular pump, and the rolling bearing further includes a locking nut (not shown) for locking the inner ring in the desired axial position.

The outer ring 5 is intended to be connected to a stationary external structure, such as the pump body of a turbomolecular pump.

In order to prevent vibrations from being transmitted to such external structure, the outer ring 5 is connected to said stationary external structure with the interposition of one or more flexible elements.

In the example shown in Figures 3 - 5, the outer ring 5 of the rolling bearing 1 is coupled to a rolling bearing support 13 including a first inner annular shell 13a, made of metal and intended to be mounted on the outer surface said outer ring 5, a second, outer annular shell 13c, made of metal, concentric with said first inner annular shell and external thereto and intended to be mounted on a seat provided in the external structure, and an intermediate elastomeric member 13b, provided between said inner and outer shells 13a, 13c and fixed thereto.

As shown in the Figures, the bearing support 13 may optionally include a disk 13d, which is fastened to the outer shell 13c and is provided with elastic pads 13e, such as viscoelastic pads, abutting against the outer surface of the outer ring 5 of the rolling bearing 1.

The rolling bearing 1 further includes a printed circuit board 15 carrying one or more sensors 17 and fitted to the outer ring 5.

In general, the printed circuit board carrying the one or more sensors can be fitted to any stationary component of the bearing.

The printed circuit board 15 preferably carries a temperature sensor 17, such as a thermistor. Nevertheless, other types of sensors (e.g. accelerometers) could be provided on said printed circuit board.

The printed circuit board 15 is preferably fitted to the face of the outer ring 5 opposite to the locking nut 11, so that it does not interfere with the correct locking of the rolling bearing to the rotating shaft.

The printed circuit board 15 is preferably press-fitted in the axial direction to the outer ring 5 of the rolling bearing 1.

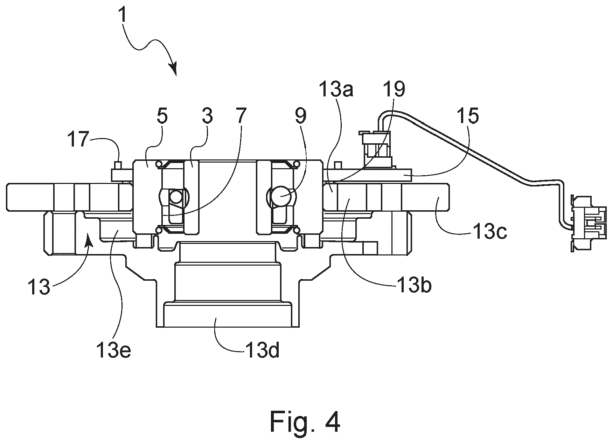

As can be seen in Figure 4, contact pads or spacers 19 may be provided between the outer ring 5 of the rolling bearing and the printed circuit board 15 in order to provide a reference for the axial positioning of said printed circuit board.

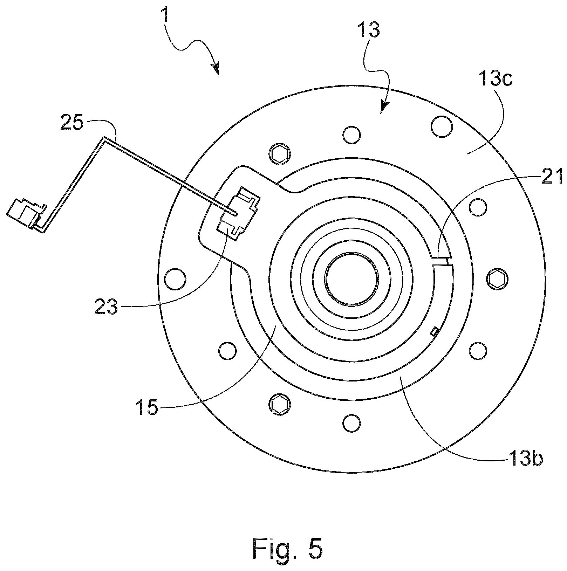

As can be seen in Figure 5, the printed circuit board 15 is preferably provided with a radial cut 21, i.e. is made as a Seeger ring.

In detail, the printed circuit board 15 has a substantially annular shape with an inner diameter and an outer diameter and the radial cut extends from the inner diameter to the outer diameter of the printed circuit board, substantially along a radius thereof.

In other words, the radial cut provides for an interruption of the printed circuit board in the circumferential direction.

In this way, the radial cut 21 increases the flexibility of the printed circuit board 15 and allows to accommodate differences in diameter between the printed circuit board 15 and the outer ring 5 of the rolling bearing, thus allowing to fit said printed circuit board 15 to said outer ring 5 of the rolling bearing in the radial direction.

It is to be noted that the increased flexibility of the circuit board 15, if on the one hand allows a precise fitting in the radial direction, on the other hand could lead to the risk of an axial misalignment of said printed circuit board itself. In order to avoid such risk, the outer ring 5 of the rolling bearing 1 could be advantageously provided with a seat (not shown), for instance made as a grove, for axially guiding the printed circuit board in the correct axial position.

It is evident from the above that the provision of the printed circuit board allows to pre-assemble the sensor(s) in a separate step, which does not involve the bearing, and then the printed circuit board with the sensor(s) can simply be fitted to the bearing, without the need of making bores in the bearing and/or employing glues or other adhesives.

This is utterly important in applications to rotary vacuum pumps, especially to turbomolecular pumps, in which very precise design of components with extremely strict tolerances is required and any risk of contamination is to be avoided.

It is also evident that the printed circuit board can be easily manufactured in a wide variety of shapes and sizes, so that the above-described arrangement can be easily and cost-effectively customized to bearings of different sizes.

In addition, many different kinds of temperature sensors, as well as many different kinds of temperature sensors, can be easily assembled to the printed circuit board, which increases the possibility of selecting the most appropriate sensor for a specific application.

The rolling bearing 1, together with its support 13 and with the printed circuit board 15, forms a cartridge-like unit, that can be installed, removed and replaced as a single body. In order to further facilitate the removal and replacing of the rolling bearing, the printed circuit board 15 can be provided with an electrical connector 23, to which an electrical cable 25 can be plugged.

The electrical cable 25 provides for the connection to the external structure, such as the pump body.

Thanks to the electrical connector 23, the need of separately connecting each sensor 17 carried by the printed circuit board is avoided.

Moreover, when the rolling bearing has to be replaced, it will be sufficient to unplug the electrical cable 25 and remove the cartridge-like unit formed by the rolling bearing 1, its support 13 and the printed circuit board 15.

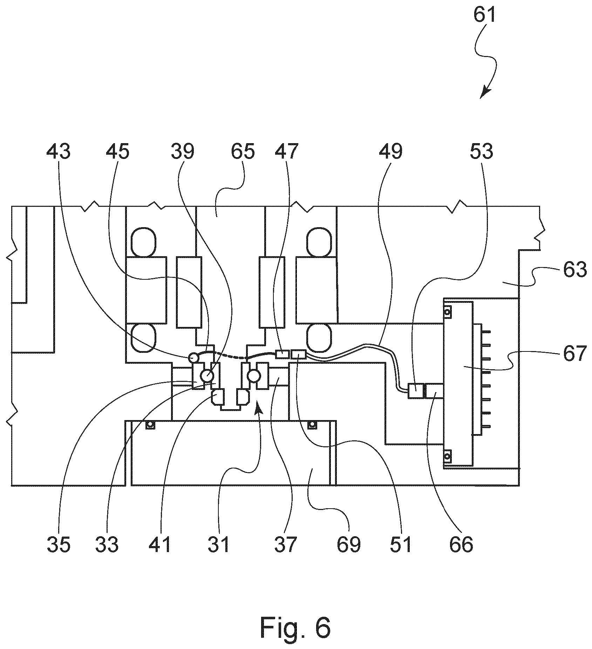

Turning now to Figure 6, a rolling bearing 31 according to another embodiment of the invention is shown.

As in the previously described embodiment, the rolling bearing 31 includes a first ring or inner ring 33 and a second ring or outer ring 35, concentric with said inner ring and external thereto, said inner and outer rings 33, 35 defining therebetween a raceway that receives a plurality of rolling elements 39.

The rolling bearing 31 could be, for instance, a deep groove ball bearing (DGBB).

The inner ring 31 is intended to be fitted onto a rotating shaft, such as the rotating shaft 65 of a turbomolecular pump 61, and the rolling bearing further includes a locking nut 41 for locking the inner ring in the desired axial position.

The outer ring 35 is intended to be connected to a stationary external structure, such as the pump body 63 of a turbomolecular pump 61.

In order to prevent vibrations from being transmitted to such external structure, the outer ring 35 is connected to said stationary external structure with the interposition of a support 37 including one or more flexible elements.

The rolling bearing 31 is provided with at least one sensor (not shown) as well as with an electrical connector 43 for power and control signal transmission to said sensor. Preferably, the rolling bearing 31 is provided with at least one temperature sensor for monitoring anomalous temperature fluctuations and temperature spikes, which could indicate a risk of failure of the rolling bearing.

The rolling bearing 31, its support 37 and the sensor with its electrical connector 43 form together a cartridge-like unit that can be installed, removed and replaced as a single body. It should be noted that the sensor can be pre-assembled to a printed circuit board, which is successively fitted to the rolling bearing 31, as in the previously disclosed embodiment. However, as an alternative, the sensor could also be coupled to the outer ring 35 of the rolling bearing 31 by means of conventional techniques, such as screwing or glueing.

In general, the sensor (along with its electrical connector) can be coupled to any stationary component of the bearing.

The electrical connector 43 on the outer ring 35 of the rolling bearing 31 has to be connected to the stationary external structure.

In the shown example, said electrical connector 43 has to be connected to a vacuum feedthrough connector 66 provided on a vacuum feedthrough plate 67 mounted to the pump body 61.

In order to facilitate the removal and replacement of the rolling bearing 31, the electrical connector 43 is connected to the first end of a first connecting cable or sensor cable 45, which carries a connector 47 at a second opposite end. A second electrical cable or extension cable 49 is further provided, which carries at a first end a connector 51 suitable for cooperating with the connector 47 of the first electrical cable 45, and at a second, opposite end a further connector 53 for electrical connection with the vacuum feedthrough connector 66 on the vacuum feedthrough plate 67.

For instance, connector 47 can be made as a plug or socket and connector 51 can be made as a socket or, respectively, as a plug.

Thanks to this arrangement, removal and replacement of the rolling bearing are made easier, as the rolling bearing 31 can be removed together with the first electrical cable 45 only, while the second electrical cable 49 is not removed from the external structure.

As a result, the vacuum feedthrough plate 67 does not have to be removed when the rolling bearing is replaced, so that the risk of compromising the vacuum tightness of the pump body is limited.

When the rolling bearing 31 has to be removed and replaced, only the lower plate 69 of the pump body has to be removed for accessing the rolling bearing.

Then, the first cable 45 can be disconnected from the second cable 49, so that the rolling bearing 31 along with the first cable 45 can be easily extracted from the pump body.

As can be seen in Figure 6, in the shown example the electrical connector 43 is arranged on the upper face of the outer ring 35 of the rolling bearing 31, i.e. on the face farther from the lower plate 69 of the pump body 63.

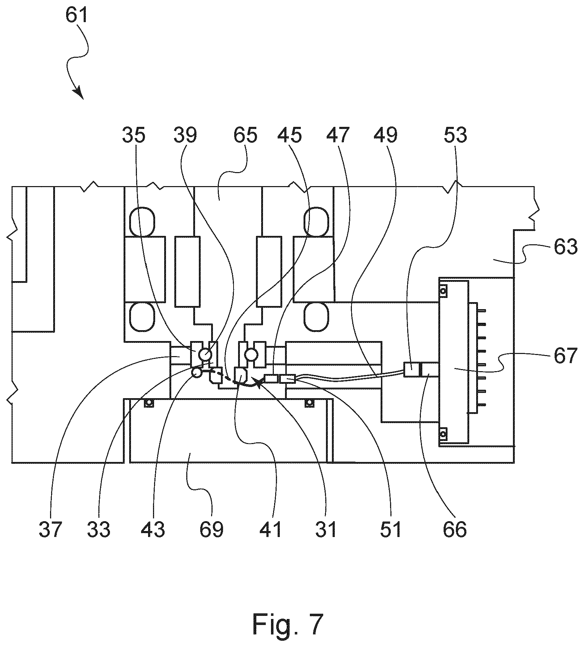

In a variant embodiment shown in Figure 7, the electrical connector 43 is arranged on the lower face of the outer ring 35 of the rolling bearing 31, i.e. on the face closer to the lower plate 69 of the pump body 63.

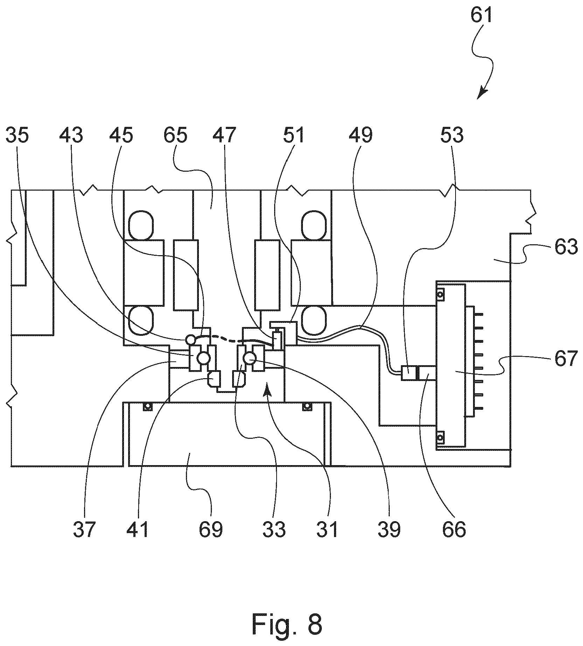

This configuration further simplifies the removing and replacing operations, strongly reduces the risk that the first cable 45 comes into contact with any rotating part of the pump 51 and, in general, strongly reduces the risk that the first cable 45 becomes entangled. Another possible configuration for avoiding the risk that the first cable 45 becomes entangled is provided in another variant embodiment shown in Figure 8.

According to this variant embodiment, the connector 47 at the second end of the first electrical cable 45 is fixed to the outer ring 35 of the rolling bearing or, preferably, to the support 37 of the rolling bearing 31, and the connector 51 at the first end of the second electrical cable 49 is fixed to the pump body 61, said connectors being positioned in such a way that they engage with each other when the rolling bearing 31 is fitted on the rotating shaft 65 of the pump 61.

As the end connectors 47, 51 are fixedly mounted, the electrical cables 45, 49 can also follow a fixed path, which does not change even during rolling bearing removal and replacement, so that entanglement or incidental contacts with rotating parts are effectively avoided.

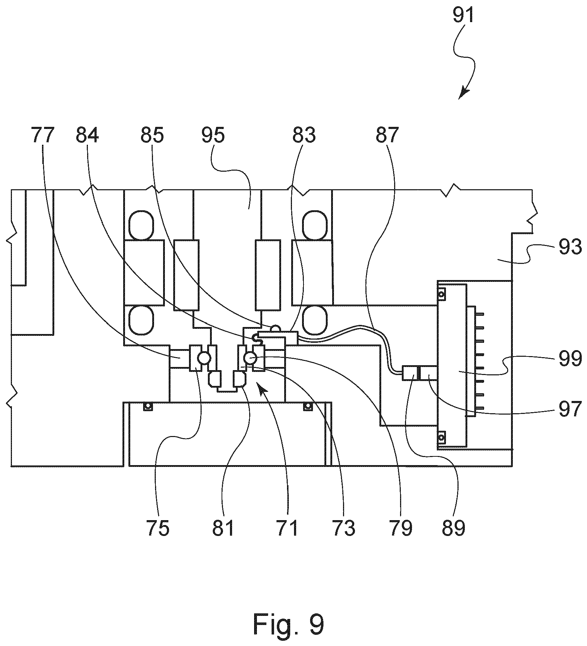

Turning now to Figure 9, a rolling bearing 71 according to another embodiment of the invention is shown.

As in the previously described embodiments, the rolling bearing 71 includes a first ring or inner ring 73 and a second ring or outer ring 75, concentric with said inner ring and external thereto, said inner and outer rings 73, 75 defining therebetween a raceway that receives a plurality of rolling elements 79.

The rolling bearing 71 could be, for instance, a deep groove ball bearing (DGBB).

The inner ring 71 is intended to be fitted onto a rotating shaft, such as the rotating shaft 95 of a turbomolecular pump 91, and the rolling bearing further includes a locking nut 81 for locking the inner ring in the desired axial position.

The outer ring 75 is intended to be connected to a stationary external structure, such as the pump body 93 of a turbomolecular pump 91.

In order to prevent vibrations from being transmitted to such external structure, the outer ring 75 is connected to said stationary external structure with the interposition of a support 77 including one or more flexible elements.

The rolling bearing 71, with its support 77, forms a cartridge-like unit, that can be installed, removed and replaced as a single body.

Unlike the previously disclosed embodiments, no sensor is provided on the rolling bearing 71.

Instead, one or more sensor(s) (among which preferably at least one temperature sensor) are mounted to a support which, in turn, is fixedly mounted to the pump body and shaped and positioned so that it comes into contact with the outer ring 75 of the rolling bearing 71 when the rolling bearing 71 is fitted onto the rotating shaft 95 of the pump 91.

In general, such support will come into contact with any stationary component of the bearing when the bearing is fitted onto the rotating shaft of the pump.

By way of example, the support can be provided with a protruding finger 83 for promoting the contact between the support and its sensor(s) and the outer ring 75 of the rolling bearing 71.

As an alternative, the support can be designed so that the sensor(s) directly come(s) into contact with the outer ring 75 of the rolling bearing 71 when the rolling bearing 71 is fitted onto the rotating shaft 95 of the pump 91.

The support can be made, for instance, as a printed circuit board.

The at least one sensor on the support is provided with or connected to an electrical connector 85, which, in turn, is connected through an electrical cable 87 and a corresponding connector 89 to a vacuum feedthrough connector 97 on a vacuum feedthrough plate 99 fitted to the pump body 93.

It is evident from the above that installing, removing and replacing the cartridge-like unit formed by the rolling bearing 71 and its support 77 is extremely easy, since no electrical cable is attached to said cartridge-like unit.

As mentioned above, a rotary vacuum pump, such as a turbomolecular pump, is usually provided with an electric motor driving the pump rotating shaft.

Such electric motor includes a motor rotor mounted to the rotating shaft and a motor stator mounted in a cavity provided in the pump body and surrounding the motor rotor.

Typically, the electric motor is a permanent magnet synchronous motor (PMSM), in which the motor stator contains the motor windings, and the magnets are placed on the motor rotor. In many high-speed applications, such as turbomolecular pumps, the magnets of the motor rotor are enclosed by a reinforcement sleeve (made, for instance, of carbon fiber) that ensures the integrity of said magnets against centrifugal forces.

According to prior art, the magnets can be directly mounted to the pump rotating shaft and the reinforcement sleeve can be fitted onto the magnets.

However, this solution entails a certain number of drawbacks.

First of all, the flexibility of the design of the pump rotating shaft is reduced since the shaft and the magnets have to be provided as a complete component. As a result, it becomes difficult to use the same motor on different pumps unless they can employ the same rotating shaft.

Secondly, the manufacturing of the components is complicated.

As an alternative, it is known to assemble the magnets with the reinforcement sleeve by interference fitting. The ends of the reinforcement sleeve are then connected to end rings which, in turn, are integral with or mounted by interference fitting to the shaft.

However, coupling by interference fitting is complicated since the reinforcement sleeve is made of a material (e.g. carbon fiber) that has a poor ductility.

As a further alternative, it is known to pre-assemble the magnets and the reinforcement sleeve as a separate unit and then press-fitting this unit in corresponding seats provided in the shaft.

The main disadvantage of this solution is that very tight manufacturing tolerances are required.

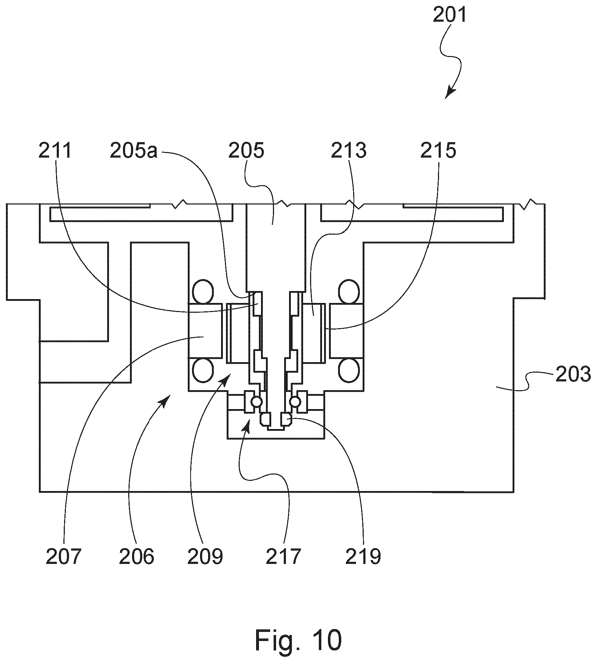

In Figure 10, a configuration allowing to easily join the permanent magnets of the motor rotor to the pump rotating shaft is schematically shown.

In Figure 10, the bottom portion of a turbomolecular pump 201 including a stationary pump housing 203 and a rotating shaft 205 is schematically shown. Figure 10 also shows the pump motor 206, which comprises a motor stator 207 mounted to the pump housing 203 and a motor rotor 209 mounted to the rotating shaft 205.

According to the shown configuration, a motor rotor assembly composed of a ferromagnetic yoke 211, a permanent magnet 213 and a reinforcement sleeve 215 is preassembled and then mounted to the pump rotating shaft 205 with play, so that it can freely slide along the axial direction.

In other words, in this configuration the inner diameter of the ferromagnetic yoke 211 is slightly larger than the diameter of the shaft 205.

The motor rotor is then locked to the pump shaft by means of the inner ring of the rolling bearing 217 provided at the lower end portion of the pump shaft, which rolling bearing is, in turn, kept in position by a locking nut 219.

By tightening the locking nut 219, the inner ring of the rolling bearing 217 presses against the motor rotor 209, until the latter abuts against a shoulder 205a provided in the pump shaft 205.

The configuration shown in Figure 10 can be assembled and disassembled with extreme ease and allows large design flexibility.

In addition, the same components can be adopted for different pumps without an increase in manufacturing and assembling complexity.

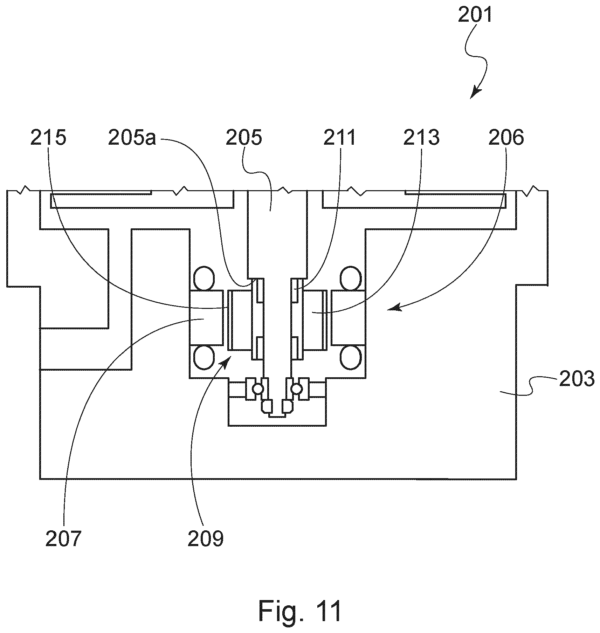

In Figure 11, a further configuration allowing to easily join the permanent magnets of the motor rotor to the shaft is schematically shown.

In Figure 10 the bottom portion of a turbomolecular pump 201 including a stationary pump housing 203 and a rotating shaft 205 is schematically shown. Figure 10 also shows the pump motor 206, which comprises a motor stator 207 mounted to the pump housing 203 and a motor rotor 209 mounted to the rotating shaft 205.

According to the shown configuration, a motor rotor assembly composed of a ferromagnetic yoke 211, a permanent magnet 213 and a reinforcement sleeve 215 is preassembled and then press-fitted onto the shaft 205.

In other words, in this configuration the inner diameter of the ferromagnetic yoke 211 has to be slightly smaller than the diameter of the shaft 205, thus ensuring an interference between the motor assembly and the shaft and creating a very stable connection. In addition, it is preferable that the material of the shaft 205 and the material of the motor ferromagnetic yoke 211 have similar thermal expansion coefficients, so as to ensure contact at different temperatures and avoid applying too large deformations to the motor magnets.

The axial location of the motor rotor assembly can be defined either by a positioning shoulder 205a in the shaft or simply by pressing said assembly to the desired location with a precision press or with appropriate tooling.

The advantages of this configuration include a great flexibility in designing the motor rotor assembly, as it is a small, stand-alone component.

In addition, the tolerances for press-fitting are less demanding than those for assembling with play, therefore the tolerance requirements for the parts are lower if compared to the previously described configuration and manufacturing costs can be reduced.

It is evident that the examples and embodiments described in the present disclosure and shown in the figures have been given for illustrative purposes only, and in no way they should be understood as limiting the scope of protection as defined by the appended claims. For instance, although in the described examples and embodiments reference has been made to implementation of the invention in a rolling bearing, it shall be understood that the invention could also be implemented in other types of bearings.

In this respect, any reference to the inner ring of the rolling bearing made in the description of the embodiments should be understood as a reference to a rotating part of a generic bearing, and any reference to the outer ring of the rolling bearing made in the description of the embodiments should be understood as a reference to a stationary part of a generic bearing.

In addition, although in the described examples and embodiments reference has been made to implementation of the invention in the bearing at the lower end portion of the rotating shaft, its shall be understood that the invention could also be applied to a bearing at the upper end portion of the rotating shaft, as well as to both the bearings provided at the opposite end portions of the rotating shaft.

## Claims

1. Rotary vacuum pump, including a stationary pump housing carrying a pump stator and a rotating shaft carrying a pump rotor, the pump stator and the pump rotor cooperating with each other for pumping a gas from a pump inlet to a pump outlet, wherein said pump is provided with a suspension arrangement between said pump housing and said rotating shaft, wherein said suspension arrangement includes at least one bearing (1), **characterized in that** said bearing (1) comprises a printed circuit board (15), which is fitted on said bearing (1) and on which one or more sensors (17) are assembled, and **in that** said printed circuit board (15) is fitted on said bearing by press-fitting.

2. Rotary vacuum pump according to claim 1, wherein said bearing (1) is a mechanical bearing, more particularly a rolling bearing (1) comprising an inner ring (3) and an outer ring (5), concentric with said inner ring and external thereto, said inner and outer rings (3, 5) defining therebetween a raceway (7) that receives a plurality of rolling elements (9), and wherein said printed circuit board (15) is fitted onto said outer ring (5) of said rolling bearing (1).

3. Rotary vacuum pump according to claim 1 or 2, wherein said sensors include at least one temperature sensor (17) and/or wherein said printed circuit board (15) has a substantially annular shape and is provided with a radial cut (17).

4. Rotary vacuum pump according to any of claims 1 to 3, wherein contact pads or axial spacers are provided between said bearing (1) and said printed circuit board (15) and/or wherein said printed circuit board (15) is provided with an electrical connector plugged thereto.

5. Rotary vacuum pump, including a stationary pump housing carrying a pump stator and a rotating shaft carrying a pump rotor, the pump stator and the pump rotor cooperating with each other for pumping a gas from a pump inlet to a pump outlet, wherein said pump is provided with a suspension arrangement between said pump housing and said rotating shaft, wherein said suspension arrangement includes at least one bearing (31), wherein said bearing comprises at least one sensor and correspondingly comprises an electrical connector (43) associated to said sensor, **characterized in that** said electrical connector (43) is connected to a first end of a first connecting cable (45), which carries a connector (47) at its second opposite end, and **in that** a second electrical cable (49) is further provided, which carries at a first end a connector (51) suitable for cooperating with said connector (47) of said first electrical cable (45), and at a second, opposite end a further connector (53) for electrical connection with an external structure.

6. Rotary vacuum pump according to claim 5, wherein said bearing is a mechanical bearing, more particularly a rolling bearing (31) comprising an inner ring (33) and an outer ring (35), concentric with said inner ring and external thereto, said inner and outer rings (33, 35) defining therebetween a raceway that receives a plurality of rolling elements (39).

7. Rotary vacuum pump according to claim 5 or 6, wherein said sensors include at least one temperature sensor (17).

8. Rotary vacuum pump according to any of claims 5 to 7, wherein said first connecting cable (45) carries a plug or, respectively, a socket at its second end, and said second electrical cable (49) carries a socket or, respectively, a plug at its first end.

9. Rotary vacuum pump according to any of claims 5 to 8, wherein said pump housing includes a vacuum feedthrough plate with a vacuum feedthrough connector, , and wherein said further connector (53) at said second end of said second electrical cable (49) is suitable for cooperating with said vacuum feedthrough connector (47).

10. Rotary vacuum pump according to claim 9, wherein said pump housing includes, at its bottom portion, a removable lower plate for granting access to said bearing (31), and wherein said electrical connector (43) is arranged on the lower face of bearing and/or wherein said connector (47) at said second end of said electrical cable (45) is fixedly mounted to said bearing or to a support (37) integral with said bearing, and said connector (51) at said first end of said second electrical cable (49) is fixedly mounted to said pump housing.

11. Rotary vacuum pump, including a stationary pump housing carrying a pump stator and a rotating shaft carrying a pump rotor, the pump stator and the pump rotor cooperating with each other for pumping a gas from a pump inlet to a pump outlet, wherein said pump is provided with a suspension arrangement between said pump housing and said rotating shaft, wherein said suspension arrangement includes at least one bearing (71), wherein a support carrying one or more sensors is mounted to the pump housing, **characterized in that** the support is arranged to contact said bearing when said bearing is mounted to said rotating shaft.

12. Rotary vacuum pump according to claim 11, wherein said support is made as a printed circuit board.

13. Rotary vacuum pump according to claim 11 or 12, wherein said support is provided with a protruding finger (83) for promoting contact between said sensor and said bearing when said bearing is mounted to the pump shaft.

## Patentansprüche

1. Drehschieber-Vakuumpumpe, umfassend ein stationäres Pumpengehäuse, das einen Pumpenstator und eine einen Pumpenrotor tragende Drehwelle trägt, wobei der Pumpenstator und der Pumpenrotor miteinander zusammenwirken, um ein Gas von einem Pumpeneinlass zu einem Pumpenauslass zu pumpen, wobei die Pumpe mit einer Aufhängungsanordnung zwischen dem Pumpengehäuse und der Drehwelle versehen ist, wobei die Aufhängungsanordnung mindestens ein Lager (1) umfasst, **dadurch gekennzeichnet, dass** das Lager (1) eine gedruckte Leiterplatte (15) umfasst, die an dem Lager (1) angebracht ist und auf der ein oder mehrere Sensoren (17) montiert sind, und dass die gedruckte Leiterplatte (15) durch Einpressen an dem Lager angebracht ist.

2. Drehschieber-Vakuumpumpe nach Anspruch 1, wobei das Lager (1) ein mechanisches Lager, insbesondere ein Wälzlager (1), ist, das einen Innenring (3) und einen konzentrisch zu dem Innenring (3) und außerhalb desselben angeordneten Außenring (5) umfasst, wobei die Innen- und Außenringe (3, 5) dazwischen eine Laufbahn (7) bilden, die eine Vielzahl von Wälzelementen (9) aufnimmt, und wobei die gedruckte Leiterplatte (15) an dem Außenring (5) des Wälzlagers (1) angebracht ist.

3. Drehschieber-Vakuumpumpe nach Anspruch 1 oder 2, wobei die Sensoren mindestens einen Temperatursensor (17) umfasst und/oder die gedruckte Leiterplatte (15) im Wesentlichen ringförmig ist und mit einem radialen Schnitt (17) versehen ist.

4. Drehschieber-Vakuumpumpe nach irgendeinem der Ansprüche 1 bis 3, wobei Kontaktflächen oder axiale Abstandshalter zwischen dem Lager (1) und der gedruckten Leiterplatte (15) vorgesehen sind, und/oder wobei die gedruckte Leiterplatte (15) mit einem darauf gesteckten elektrischen Verbinder versehen ist.

5. Drehschieber-Vakuumpumpe, umfassend ein stationäres Pumpengehäuse, das einen Pumpenstator und eine einen Pumpenrotor tragende Drehwelle trägt, wobei der Pumpenstator und der Pumpenrotor miteinander zusammenwirken, um ein Gas von einem Pumpeneinlass zu einem Pumpenauslass zu pumpen, wobei die Pumpe mit einer Aufhängungsanordnung zwischen dem Pumpengehäuse und der Drehwelle versehen ist, wobei die Aufhängungsanordnung mindestens ein Lager (31) umfasst, wobei der Lager mindestens einen Sensor umfasst und dementsprechend einen dem Sensor zugeordneten elektrischen Verbinder (43) umfasst, **dadurch gekennzeichnet, dass** der elektrische Verbinder (43) mit einem ersten Ende eines ersten Verbindungskabels (45) verbunden ist, das an seinem zweiten, gegenüberliegenden Ende einen Verbinder (47) trägt, und dass ein zweites elektrisches Kabel (49) weiter vorgesehen ist, das an einem ersten Ende einen zum Zusammenwirken mit dem Verbinder (47) des ersten elektrischen Kabels (45) geeigneten Verbinder (51) trägt, und an einem zweiten, gegenüberliegenden Ende einen weiteren Verbinder (53) zur elektrischen Verbindung mit einer externen Struktur trägt.

6. Drehschieber-Vakuumpumpe nach Anspruch 5, wobei das Lager ein mechanisches Lager, insbesondere ein Wälzlager (31), ist, das einen Innenring (33) und einen konzentrisch zu dem Innenring (3) und außerhalb desselben angeordneten Außenring (35) umfasst, wobei die Innen- und Außenringe (33, 35) dazwischen eine Laufbahn bilden, die eine Vielzahl von Wälzelementen aufnimmt (39).

7. Drehschieber-Vakuumpumpe nach Anspruch 5 oder 6, wobei die Sensoren mindestens einen Temperatursensor (17) umfassen.

8. Drehschieber-Vakuumpumpe nach irgendeinem der Ansprüche 5 bis 7, wobei das erste Verbindungskabel (45) an seinem zweiten Ende einen Stecker bzw. eine Buchse trägt, und das zweite elektrische Kabel (49) an seinem ersten Ende eine Buchse bzw. einen Stecker trägt.

9. Drehschieber-Vakuumpumpe nach irgendeinem der Ansprüche 5 bis 8, wobei das Pumpengehäuse eine Vakuumdurchführungsplatte mit einem VakuumdurchführungsVerbinder umfasst, und wobei der weitere Verbinder (53) am zweiten Ende des zweiten elektrischen Kabels (49) zum Zusammenwirken mit dem Vakuumdurchführungsverbinder (47) geeignet ist.

10. Drehschieber-Vakuumpumpe nach Anspruch 9, wobei das Pumpengehäuse an seinem unteren Abschnitt eine den Zugang zum Lager (31) ermöglichende, abnehmbare Bodenplatte umfasst, und wobei der elektrische Verbinder (43) an der Unterseite des Lagers angeordnet ist und/oder wobei der an dem zweiten Ende des elektrischen Kabels (45) angeordnete Verbinder (47) fest an dem Lager oder an einer einstückig mit diesem Lager ausgebildeten Halterung (37) montiert ist, und der an dem ersten Ende des zweiten elektrischen Kabels (49) angeordnete Verbinder (51) fest an dem Pumpengehäuse montiert ist.

11. Drehschieber-Vakuumpumpe, umfassend ein stationäres Pumpengehäuse, das einen Pumpenstator und eine einen Pumpenrotor tragende Drehwelle trägt, wobei der Pumpenstator und der Pumpenrotor miteinander zusammenwirken, um ein Gas von einem Pumpeneinlass zu einem Pumpenauslass zu pumpen, wobei die Pumpe mit einer Aufhängungsanordnung zwischen dem Pumpengehäuse und der Drehwelle versehen ist, wobei die Aufhängungsanordnung mindestens ein Lager (71) umfasst, wobei eine Halterung, die einen oder mehrere Sensoren trägt, an dem Pumpengehäuse angebracht ist, **dadurch gekennzeichnet, dass** die Halterung so angeordnet ist, dass sie mit dem Lager in Kontakt steht, wenn das Lager an der Drehwelle angebracht ist.

12. Drehschieber-Vakuumpumpe nach Anspruch 11, wobei die Halterung als eine gedruckte Leiterplatte ausgebildet ist.

13. Drehschieber-Vakuumpumpe nach Anspruch 11 oder 12, wobei die Halterung mit einem hervorstehenden Finger (83) versehen ist, um den Kontakt zwischen dem Sensor und dem Lager zu fördern, wenn das Lager an der Pumpenwelle angebracht ist.

## Revendications

1. Pompe à vide rotative, comprenant un carter de pompe fixe portant un stator de pompe et un arbre rotatif portant un rotor de pompe, le stator de pompe et le rotor de pompe coopérant l'un avec l'autre pour pomper un gaz depuis une entrée de pompe vers une sortie de pompe, dans laquelle cette pompe est pourvue d'un système de suspension entre ce carter de pompe et cet arbre rotatif, ce système de suspension comprenant au moins un palier (1), **caractérisée en ce que** ce palier (1) comprend une carte de circuit imprimé (15), qui est montée sur ce palier (1) et sur laquelle sont assemblés un ou plusieurs capteurs (17), et **en ce que** cette carte de circuit imprimé (15) est montée sur ce palier par emmanchement à la presse.

2. Pompe à vide rotative selon la revendication 1, dans laquelle ce palier (1) est un palier mécanique, plus particulièrement un palier à roulement (1) comprenant une bague intérieure (3) et une bague extérieure (5), concentrique à cette bague intérieur et agencée à l'extérieur de celle-ci, ces bagues intérieure et extérieure (3, 5) définissant entre elles une piste de roulement (7) qui reçoit une pluralité d'éléments roulants (9), et dans laquelle cette carte de circuit imprimé (15) est montée sur cette bague extérieure (5) de ce palier à roulement (1).

3. Pompe à vide rotative selon la revendication 1 ou 2, dans laquelle ces capteurs comprennent au moins un capteur de température (17) et/ou dans laquelle cette carte de circuit imprimé (15) présente une forme sensiblement annulaire et est pourvue d'une entaille radiale (17).

4. Pompe à vide rotative selon l'une quelconque des revendications 1 à 3, dans laquelle des plages de contact ou des entretoises axiales sont prévus entre ce palier (1) et cette carte de circuit imprimé (15) et/ou dans laquelle cette carte de circuit imprimé (15) est pourvue d'un connecteur électrique branché à celle-ci.

5. Pompe à vide rotative, comprenant un carter de pompe fixe portant un stator de pompe et un arbre rotatif portant un rotor de pompe, le stator de pompe et le rotor de pompe coopérant l'un avec l'autre pour pomper un gaz depuis une entrée de pompe vers une sortie de pompe, dans laquelle cette pompe est pourvue d'un système de suspension entre ce carter de pompe et cet arbre rotatif, dans laquelle ce système de suspension comprend au moins un palier (31), dans laquelle ce palier comprend au moins un capteur et comprend de manière correspondante un connecteur électrique (43) associé à ce capteur, **caractérisée en ce que** ce connecteur électrique (43) est relié à une première extrémité d'un premier câble de raccordement (45), qui porte à sa deuxième extrémité opposée un connecteur (47), et **en ce qu'**un deuxième câble électrique (49) est en outre prévu, qui porte à une première extrémité un connecteur (51) apte à coopérer avec ce connecteur (47) de ce premier câble électrique (45), et à une deuxième extrémité opposée un autre connecteur (53) destiné à la connexion électrique avec une structure externe.

6. Pompe à vide rotative selon la revendication 5, dans laquelle ce palier est un palier mécanique, plus particulièrement un palier à roulement (31) comprenant une bague intérieure (33) et une bague extérieure (35), concentrique à cette bague intérieure et agencée à l'extérieur de celle-ci, ces bagues intérieure et extérieure (33, 35) définissant entre elles une piste de roulement qui reçoit une pluralité d'éléments roulants (39).

7. Pompe à vide rotative selon la revendication 5 ou 6, dans laquelle ces capteurs comprennent au moins un capteur de température (17).

8. Pompe à vide rotative selon l'une quelconque des revendications 5 à 7, dans laquelle ce premier câble de raccordement (45) porte à sa deuxième extrémité une fiche ou, respectivement, une prise, et dans laquelle ce deuxième câble électrique (49) porte à sa première extrémité une prise ou, respectivement, une fiche.

9. Pompe à vide rotative selon l'une quelconque des revendications 5 à 8, dans laquelle ce carter de pompe comprend une plaque de traversée sous vide dotée d'un connecteur de traversée sous vide, et dans laquelle cet autre connecteur (53) à cette deuxième extrémité de ce deuxième câble électrique (49) est apte à coopérer avec ce connecteur de traversée sous vide (47).

10. Pompe à vide rotative selon la revendication 9, dans laquelle ce carter de pompe comprend, au niveau de sa partie inférieure, une plaque inférieure amovible permettant d'accéder à ce palier (31), et dans laquelle ce connecteur électrique (43) est disposé sur la face inférieure du palier et/ou dans laquelle ce connecteur (47) à cette deuxième extrémité de ce câble électrique (45) est monté de manière fixe sur ce palier ou sur un support (37) solidaire à ce palier, et ce connecteur (51) à cette première extrémité de ce deuxième câble électrique (49) est monté de manière fixe sur ce carter de pompe.

11. Pompe à vide rotative, comprenant un carter de pompe fixe portant un stator de pompe et un arbre rotatif portant un rotor de pompe, le stator de pompe et le rotor de pompe coopérant l'un avec l'autre pour pomper un gaz depuis une entrée de pompe vers une sortie de pompe, dans laquelle cette pompe est pourvue d'un système de suspension entre ce carter de pompe et cet arbre rotatif, ce système de suspension comprenant au moins un palier (71), dans laquelle un support portant un ou plusieurs capteurs est monté sur le carter de pompe, **caractérisée en ce que** ce support est agencé de façon à entrer en contact avec ce palier lorsque ce palier est monté sur cet arbre rotatif.

12. Pompe à vide rotative selon la revendication 11, dans laquelle ce support est réalisé sous la forme d'une carte de circuit imprimé.

13. Pompe à vide rotative selon la revendication 11 ou 12, dans laquelle ce support est muni d'un doigt en saillie (83) destiné à favoriser le contact entre ce capteur et ce palier lorsque ce palier est monté sur l'arbre de la pompe.
